# EUROPEAN PATENT APPLICATION

(11) **EP 4 386 299 A2**
(43) Date of publication of application: **19.06.2024**
(21) Application number: 24173568.7
(22) Date of filing: 28.09.2021
(51) Int. Cl.: F27D 1/12

(54) **COOLING DEVICE FOR AN ELECTRIC FURNACE OR SUCHLIKE**

(30) Priority: 29.10.2020 IT 202000025735
(62) Divisional of application: 21794652.4
(71) Applicant: DANIELI & C. OFFICINE MECCANICHE S.P.A., 33042 Buttrio (UD) (IT)
(72) Inventor: Pasut, Marco, 33042 Buttrio (UD) (IT)
(74) Representative: Petraz, Gilberto Luigi

(57) **Abstract**

Cooling device suitable to be used in an electric melting furnace (30), or suchlike, in cooperation with the lateral wall of said electric furnace (30) and comprising at least one pair of cooling panels (11b, 12b) each provided with a plurality of cooling tubes (15, 16); the electric furnace (30) comprises at the lower part at least one shell (17) to contain the molten metal bath (18) and a jacket (19) above it, in which said cooling panels (11b, 12b) are positioned; the tubes (15, 16) provided in the panels (11b, 12b) are interspersed with free spaces (22, 23), in such a way that at least in the proximity of any one free space (22, 23) of one panel (11b, 12b) there is positioned at least one tube (15, 16) of another panel (11b, 12b), and in such a way that substantially the tubes (15) comprised in one panel (11b) are offset from the tubes (16) comprised in the other panel (12b).

## Description

### FIELD OF THE INVENTION

The present invention concerns a cooling device for an electric furnace or suchlike, in particular a cooling device with panels.

The device according to the invention can be used in electric melting furnaces, in particular in electric arc furnaces, in cooperation with the lateral walls, and more specifically in the lateral zone immediately above the refractory-lined shell that contains the molten metal bath.

### BACKGROUND OF THE INVENTION

Electric melting furnaces, in particular electric arc furnaces, comprise a refractory-lined shell at the lower part, which incorporates the sole, above which there is a jacket that acts as a lateral wall where cooling panels are normally positioned.

In the state of the art, the lateral wall of the furnace is defined by lateral panels disposed substantially in correspondence with the external edge of the shell; this allows the at least partial formation of a layer of slag which anchors onto the panels, a layer of slag which however is not sufficient to protect the panels from the very violent thermal and chemical stresses that are reached in current arc furnaces.

This layer of slag acts as an insulator to reduce the thermal flow and therefore at least partly preserve the cooling panels from premature wear.

This solution, however, is not particularly effective since the slag anchors onto the internal face of the panels with difficulty and therefore fails to form a compact and uniform layer suitable to perform the thermal insulation function effectively.

It is also known that one of the major disadvantages that occur in a melting furnace as the melting cycles progress concerns the wear and progressive erosion of the refractory lining that the shell consists of in the zone located in correspondence with the slag edge, that is, substantially in the upper circular section of the shell.

In this upper zone of the shell, the combination of the temperature and the effects of the violent chemical reactions that occur during the melting process determines accentuated erosion phenomena that progressively structurally damage the refractory lining.

This forces operators to intervene between one cycle and another to restore correct conditions of efficiency of the refractory lining and to prevent the risk of perforations which are very dangerous for the safety of the workers.

Furthermore, with this type of panels, the thermal flow directed toward the outside of the furnace is very high and a large amount of energy is lost.

This is due to the large extension of the surface on which the thermal exchange occurs, since the tubes that constitute the panels are adjacent to each other, covering the entire lateral surface of the furnace in the zone without refractory lining.

One attempt to at least partly remedy the problems described above is the use of cooling devices with lateral panels made substantially in two layers: an internal layer characterized by a distancing between each tube that makes up the panel, and an external layer in which the tubes are instead side by side and adjacent to each other.

A hollow space, either empty or equipped with hooks, is present between the two panels, which is able to accommodate and cool layers of slag that are deposited in it during the subsequent castings, so that it effectively becomes an additional insulating screen. When provided, the hooks further help the slag to remain hanging on these panels.

Such known cooling devices have some disadvantages. Because the external panel is made with a series of tubes disposed side by side and adjacent to each other, the manufacturing costs are very high, the manufacturing procedures have a certain complexity and, furthermore, the cooling effectiveness of these devices based on such panels can be improved.

Furthermore, normally, the internal panel and the external panel are fed by a single cooling circuit, therefore, in the event of a fault, it is necessary to immediately stop the operations of the furnace, since the cooling device substantially ceases to function, and the furnace can be damaged.

Documents WO-A-2005/075688, WO-A-2005/103305 and WO-A-0001854 describe in various ways cooling devices that can be used for metallurgical applications which nevertheless present the problems above.

There is therefore the need to perfect a cooling device for an electric furnace or suchlike that can overcome at least one of the disadvantages of the state of the art.

In particular, one purpose of the present invention is to provide a cooling device for an electric furnace or suchlike that allows, in an effective and economical manner, to eliminate or at least reduce the problem of progressive wear of the panels, in particular in correspondence with the upper circular section of the shell.

Another purpose of the present invention is to provide a cooling device which allows the insulation properties of the slag layer to be exploited more effectively, preserving the lateral panels from wear and progressive consumption, and therefore considerably increasing the duration of the panels.

Another purpose is to provide a cooling device that allows to use, in order to produce one or more lateral panels, a reduced number of cooling tubes compared to traditional solutions, maintaining or even improving the cooling efficiency.

Another purpose of the present invention is to obtain a cooling device by means of which, in the event of faults to the cooling circuit associated with such device, at least a temporary continuity of production of the furnace can be guaranteed, in any case guaranteeing an effective cooling of the furnace.

The Applicant has devised, tested and embodied the present invention to overcome the shortcomings of the state of the art and to obtain these and other purposes and advantages.

### SUMMARY OF THE INVENTION

The present invention is set forth and characterized in the independent claims. The dependent claims describe other characteristics of the present invention or variants to the main inventive idea.

In accordance with the above purposes, a cooling device according to the present invention, suitable to be used in an electric melting furnace, or suchlike, in cooperation with its lateral wall, comprises at least one pair of cooling panels each provided with a plurality of cooling tubes.

According to one aspect of the invention, the tubes provided in each of the panels are interspersed with free spaces, in such a way that at least in the proximity of, or overlapping with, a free space of a first panel there is positioned at least one tube of a second panel, and in such a way that substantially the tubes comprised in a first panel are offset from the tubes comprised in the second panel. Furthermore, these panels are each fed by a cooling circuit of their own. Moreover, the tubes of one panel are inserted into the free spaces made between the tubes of the other panel, substantially forming a double comb structure.

In this way, advantageously, the tubes of each panel are distanced from each other, avoiding the problem of their close positioning; however, the coupling between a first and a second panel in any case entails the formation of a continuous and homogeneous wall of cooling tubes, without hollow spaces or zones with varying density of tubes.

Thanks to this disposition, it is possible to produce a cooling device that effectively and economically allows to eliminate, or at least reduce, the problem of progressive wear of the panels of the furnace, in particular in correspondence with the upper circular section of the shell.

Furthermore, the cooling device allows the insulation properties of the slag layer to be exploited more effectively, preserving the panels from wear and progressive consumption and therefore considerably increasing the duration of such panels.

The cooling device advantageously allows to use, in order to produce one or more lateral panels, a reduced number of cooling tubes compared to traditional solutions, maintaining or even improving the cooling efficiency.

Furthermore, in the event of a fault in the cooling circuit associated with one of the panels, the other panel can still remain operational to cool the furnace, which can therefore continue production without damages.

At least one pair of tubes of one panel can be adjacent to and be inserted into the free space made between pairs of tubes of the other panel.

The tubes of each of the panels can be directed in a substantially vertical direction and can be connected by means of substantially horizontal connection pipeline segments.

Said panels can provide at least one connection pipeline segment which extends substantially along the entire extension of the panel.

Another purpose of the invention is an electric furnace comprising a shell provided with at least one cooling device with lateral panels as defined above.

### BRIEF DESCRIPTION OF THE DRAWINGS

These and other aspects, characteristics and advantages of the present invention will become apparent from the following description of some embodiments, given as a non-restrictive example with reference to the attached drawings wherein:
- fig. 1 is a lateral section view of a first embodiment of a cooling device for an electric furnace or suchlike;
- fig. 2 is a three-dimensional view of a second embodiment of a cooling device according to the present invention.

To facilitate comprehension, the same reference numbers have been used, where possible, to identify identical common elements in the drawings. It is understood that elements and characteristics of one embodiment can conveniently be combined or incorporated into other embodiments without further clarifications.

### DETAILED DESCRIPTION OF SOME EMBODIMENTS

We will now refer in detail to the possible embodiments of the invention, of which one or more examples are shown in the attached drawings, by way of a non-limiting illustration. The phraseology and terminology used here is also for the purposes of providing non-limiting examples.

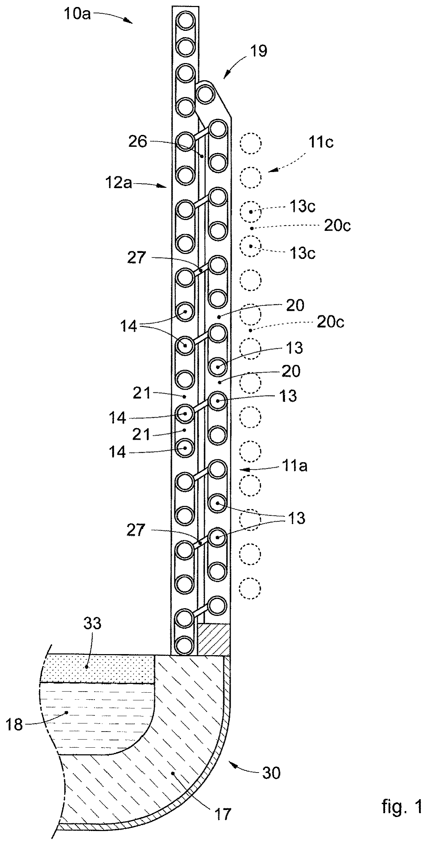

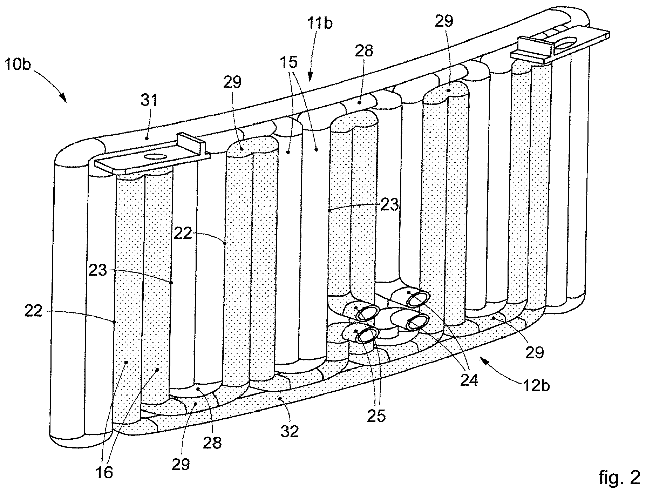

With reference to the attached drawings, figs. 1 and 2 show a cooling device 10a, 10b, suitable to be used in an electric melting furnace 30 or suchlike, in particular in cooperation with the lateral wall of the electric furnace 30.

The cooling device 10a, 10b comprises at least one pair of cooling panels 11a, 12a, 11b, 12b each provided with a plurality of cooling tubes 13, 14, 15 and 16.

The electric furnace 30 comprises at the lower part at least one refractory shell 17 to contain the molten metal bath 18 and a jacket 19 above it in which the cooling panels 11a, 12a, 11b, 12b, preferably made of steel, are positioned. The molten metal bath 18 has an upper level above which there is a layer of slag 33.

The tubes 13, 14, 15, 16 provided in the panels 11a, 12a, 11b, 12b are interspersed with free spaces 20, 21, 22, 23, in such a way that at least in the proximity of any one free space 20, 21, 22, 23 whatsoever of a first panel 11a, 12a, 11b, 12b, there is positioned at least one tube 13, 14, 15, 16 of a second panel 11a, 12a, 11b, 12b, and in such a way that substantially the tubes 13, 15 comprised in one panel 11a, 11b are offset from the tubes 14, 16 comprised in the other panel 12a, 12b.

In particular, in the cooling panel 11a and in the cooling panel 12a the free spaces 20 and 21 are made between tubes 13 and 14 located consecutively.

In the cooling panel 11b and in the cooling panel 12b the free spaces 22 and 23 can be substantially U-shaped and allow to substantially define a double comb structure.

Each of the panels 11a, 12a, 11b, 12b is fed by its own cooling circuit. See for example the ducts 24 for the entry and exit of a cooling fluid into/from the panel 11b and the ducts 25 for the entry and exit of a cooling fluid into/from the panel 12b. This cooling fluid can be, for example, water.

In the embodiment of fig. 1, shown by way of a non-limiting example, the present cooling device 10a comprises at least one external panel 11a and at least one internal panel 12a separated by a hollow space 26.

The slag accumulates inside the hollow space 26, forming an insulating layer that protects the panels 11a and 12a from consumption and wear.

As mentioned, this free space 20 is made between each pair of consecutive tubes 13 of the external panel 11a and the free space 21 is made between each pair of consecutive tubes 14 of the internal panel 12a.

Preferably, the tubes 13 and 14 that respectively form the external panel 11a and the internal panel 12a can have substantially the same external diameter and the extension of the free space 20 and 21 is equal to at least this external diameter. In other embodiments, the external diameter of the tubes 13 and 14 could be different.

As can also be seen, the tubes 13 of the external panel 11a and the tubes 14 of the internal panel 12a are aligned according to a substantially horizontal direction, therefore each tube 13 of the external panel 11a is vertically offset from each tube 14 of the internal panel 12a, and vice versa.

Thanks to this disposition, the jacket 19 comprising the cooling panels 11a and 12a appears at the front as a wall complete with tubes 13 and 14, in particular tubes positioned in a substantially horizontal direction and, as mentioned, vertically offset.

The external panel 11a and the internal panel 12a can be connected to each other by means of connection elements 27, for example hooks or other, in order to guarantee a better structural solidity and in such a way as to promote the anchoring of the slag in order to form a layer of insulating material inside the hollow space 26.

The connection elements 27 can be made with a material with high thermal conductivity and possibly could be entirely cooled by the circulation of cooling fluid.

In some embodiments, the connection elements 27 could be inclined, as shown in fig. 1.

In the embodiment of fig. 2, shown by way of a non-limiting example, the present cooling device 10b comprises a substantially double-comb structure.

In particular, the cooling device 10b comprises a single lateral part formed by the two panels 11b and 12b which substantially interlock reciprocally, forming a double comb structure.

In this cooling device 10b, at least one pair of tubes 15 of the panel 11b is inserted in the free space 23 made between two pairs of tubes 16 of the other panel 12b.

Similarly, at least one pair of tubes 16 of the panel 12b is inserted into the free space 22 made between two pairs of tubes 15 of the other panel 1 1b.

Substantially, the tubes 15 and 16 of each of the panels 11b and 12b can be directed in a substantially vertical direction and can be connected by means of substantially horizontal connection pipeline segments 28 and 29.

In particular, the panels 11b and 12b provide at least one connection pipeline segment 31 and 32 which extends substantially along the entire extension of the panel 11b and 12b.

By means of the cooling device 10b with double comb configuration and with independent cooling circuits of the two panels 11b and 12b, in the event that one of the two panels 11b or 12b accidentally fails, for example following a hole in one of the tubes, and the feed of the cooling fluid has to be closed, the other panel, since it is in direct contact with it, at least partly cools it and therefore allows the cooling to continue, thus allowing a continuation of the production phase of the electric furnace 30, until there is a maintenance slot to replace the panel.

Of course, as mentioned above, it is understood that the possibility of feeding the cooling panels with independent cooling circuits can also be provided for the cooling device 10a of fig. 1. Therefore, the external panel 11a will be fed by a cooling circuit of its own and the internal panel 12a will be fed by a cooling circuit of its own.

Another variant of the present cooling device 10a or 10b could provide for the provision of more than two panels 11a, 12a or 11b, 12b.

For example, the cooling device 10a could provide another panel 11c, shown in dashed lines in fig. 1, which provides a series of tubes 13c which are offset with respect to the tubes 13 of the panel 11a, which would be adjacent to and distanced from the panel 1 1c. The tubes 13c of the panel 11c could be sized and positioned like the tubes 14 of the panel 12a but also in a different way, that is, having different positions and free spaces 20c between two consecutive tubes 13c of greater or lesser extension than, for example, the extension of the free spaces 20. Between the panel 11c and the panel 11a, for example, another protective hollow space would be created. The panel 12c could also provide tubes 13c offset both with respect to the tubes 13 of the panel 11a and also to the tubes 14 of the panel 12a.

It is also possible to provide more than two panels in the cooling device 10b. For example, at least one of the two panels 11b, 12b could be split and formed by two adjacent panels, each provided with a circuit for feeding the cooling fluid of its own, or other.

It is clear that modifications and/or additions of parts may be made to the cooling device 10a, 10b as described heretofore, without departing from the field and scope of the present invention as defined by the claims.

In the following claims, the sole purpose of the references in brackets is to facilitate reading: they must not be considered as restrictive factors with regard to the field of protection claimed in the specific claims.

## Claims

1. Cooling device suitable to be used in an electric melting furnace (30), or suchlike, comprising at the lower part at least one shell (17) to contain the metal bath (18) and a jacket (19) above it, in which there are positioned cooling panels (11b, 12b) each provided with a plurality of tubes (15, 16), **characterized in that** said tubes (15, 16) are interspersed with free spaces (22, 23), wherein at least one of said tubes (15, 16) is positioned at least in the proximity of, or overlapping with, any one whatsoever of said free spaces (22, 23), in such a way that at least one tube (15) of said at least one panel (11b) is offset with respect to another tube (16) of at least one said other panel (12b), wherein each of said panels (1 1b, 12b), in use, is fed by a its own cooling circuit, and wherein the tubes (15, 16) of one panel (11b, 12b) are inserted into the free spaces (22, 23) made between the tubes (15, 16) of the other panel (11b, 12b) substantially forming a double comb structure.

2. Cooling device as in claim 1, **characterized in that** at least one pair of tubes (15, 16) of one panel (11b, 12b) is inserted into the free space (22, 23) made between two pairs of tubes (15, 16) of the other panel (12b, 11b).

3. Cooling device as in any claim hereinbefore, **characterized in that** said tubes (15, 16) of each of the panels (11b, 12b) are directed in a substantially vertical direction and are connected by means of substantially horizontal connection pipeline segments (28, 29).

4. Cooling device as in any claim hereinbefore, **characterized in that** said panels (11b, 12b) provide at least one connection pipeline segment (31, 32) which extends substantially along the entire extension of the panel (11b, 12b).

5. Electric furnace, comprising a jacket (19) provided with at least one cooling device (10a, 10b) as in any claim hereinbefore.
